**Europäisches Patentamt**

**European Patent Office**

**Office européen des brevets**

(11) Veröffentlichungsnummer: **0 123 905**
**A2**

(12) ## EUROPÄISCHE PATENTANMELDUNG

(21) Anmeldenummer: **84103393.9**

(51) Int. Cl.³: **H 04 Q 1/14**

(22) Anmeldetag: **27.03.84**

(30) Priorität: **29.03.83 DE 3311488**

(43) Veröffentlichungstag der Anmeldung: **07.11.84**
**Patentblatt 84/45**

(84) Benannte Vertragsstaaten: **AT BE CH FR GB LI NL SE**

(71) Anmelder: **Siemens Aktiengesellschaft, Berlin und München Wittelsbacherplatz 2, D-8000 München 2 (DE)**

(72) Erfinder: **Scholtholt, Hans, Tannenstrasse 4, D-8044 Lohhof (DE)**
Erfinder: **Steiner, Ewald, Fichtenweg 11, D-8137 Berg 3 (DE)**

(54) **Überspannungsschutzvorrichtung zum Anbau an einen Anschlussverteiler.**

(57) Die Erfindung betrifft eine Überspannungsschutzvorrichtung zum Anbau an einen Anschlußverteiler mit in einer Vielzahl von parallelen Reihen angeordneten und den abisolierfreien Anschluß von elektrischen Leitern gestattenden Anschlußklemmen.

Zur Ermöglichung eines vorbereiteten bzw. nachträglichen Anbaus von Überspannungsschutzeinrichtungen können alternativ mit Hilfe von Führungsrahmen (4) an der Vorder- und Rückseite von Anschlußverteilern (1) Sicherungsleisten (10), welche Überspannungsableiter (16) enthalten, an die Anschlußklemmen (3) des Anschlußverteilers (1) ankontaktiert werden.

Überspannungsschutzvorrichtung zum Anbau an einen Anschlußverteiler.

Die Erfindung betrifft eine Überspannungsschutzvorrichtung zum Anbau an einen Anschlußverteiler mit
in einer Vielzahl von parallelen Reihen angeordneten
und den abisolierfreien Anschluß von elektrischen
Leitern gestattenden Anschlußklemmen.

Ein Anschlußverteiler mit in einer Vielzahl von parallelen Reihen angeordneten, den abisolierfreien Anschluß
von elektrischen Leitern gestattenden Anschlußklemmen
ist z.B. aus er DE-OS 28 14 018 bekannt. Einen derartigen Anschlußverteiler mit Überspannungsschutzeinrichtungen zu versehen, ist nur mit einem erheblichen Aufwand möglich, da Bauteile, welche Überspannungsableiter
enthalten, zusätzlich anrangiert werden müssen. Dazu
werden aber zusätzliche Rangierpunkte am Anschlußverteiler benötigt, so daß die Anschlußkapazität verkleinert wird.

Aufgabe der vorliegenden Erfindung ist es, eine Überspannungsschutzvorrichtung zum Anbau an einen Anschlußverteiler der eingangs genannten Art anzugeben, der
sich durch einen einfachen Aufbau auszeichnet, und dessen Verwendung keine zusätzlichen Rangiermaßnahmen erfordert.

Diese Aufgabe wird dadurch gelöst, daß ein an den
Anschlußverteiler anbringbarer Führungsrahmen zur Aufnahme von mit Überspannungsableitern bestückten Sicherungsleisten vorgesehen ist, wobei jeder Reihe von An-Som 1 Bo / 28.3.1983 schlußklemmen eine in den Führungsrahmen einschiebbare Sicherungsleiste zugeordnet ist, die im eingeschobenen Zustand mit jeder Anschlußklemme einer Reihe einen Kontakt bildet und jede Anschlußklemme über einen Überspannungsableiter mit Erdpotential verbindet.

Die erfindungsgemäße Überspannungsschutzvorrichtung bietet den Vorteil, daß keine zusätzlichen Rangierpunkte benötigt werden und bei vorhandenen Anschlußverteilern ein nachträglicher Anbau von Überspannungsableitern ohne umfangreiche Rangiermaßnahmen ermöglicht wird. Ein weiterer Vorteil der erfindungsgemäßen Überspannungsschutzvorrichtung liegt darin, daß diese Überspannungsschutzvorrichtung keine zusätzliche Montagefläche benötigt.

Eine zweckmäßige Weiterbildung der Überspannungsschutzvorrichtung gemäß der Erfindung ist dadurch gekennzeichnet, daß der Führungsrahmen sowohl an der Vorder- als auch an der Rückseite des Anschlußverteilers anbringbar ist, und daß bei rückseitiger Anbringung des Führungsrahmens die Anschlußklemmen nach hinten verlängert sind, wobei die Verlängerungen einen in der Ebene der Anschlußklemme liegenden keilförmigen Einschnitt mit abgeschrägten Kanten aufweisen.

Eine rückseitige Anbringung der Überspannungsschutzvorrichtung ist vor allem bei einer Neuinstallierung eines Anschlußverteilers vorteilhaft, da in diesem Falle Rangierarbeiten am Anschlußverteiler durch die Überspannungsschutzvorrichtung nicht erschwert werden.

Weitere Ausgestaltungen sowie Vorteile der erfindungsgemäßen Überspannungsschutzvorrichtung ergeben sich aus den Unteransprüchen sowie aus dem nachfolgend beschrie-

0123905

benen Ausführungsbeispiel einer Überspannungschutzvorrichtung gemäß der Erfindung.

Die vorliegende Erfindung soll im folgenden anhand eines
in der Zeichnung dargestellten Ausführungsbeispiels näher
erläutert werden. Es zeigen

Fig. 1 eine perspektivische Explosionsdarstellung von
Anschlußverteiler, Führungsrahmen und Sicherungsleiste
bei vorderseitigem Anbau einer Überspannungsschutzvorrichtung gemäß der Erfindung,

Fig. 2 eine perspektivische Explosionsdarstellung von
Anschlußverteiler, Führungsrahmen und Sicherungsleiste
bei rückseitigem Anbau einer Überspannungsschutzvorrichtung gemäß der Erfindung,

Fig. 3 in perspektivischer Darstellung den Aufbau einer
Sicherungsleiste für eine erfindungsgemäße Überspannungsschutzvorrichtung, und

Fig. 4 bis Fig. 6 in perspektivischer Darstellung weitere
Einzelheiten der Überspannungsschutzvorrichtung gemäß
der Erfindung.

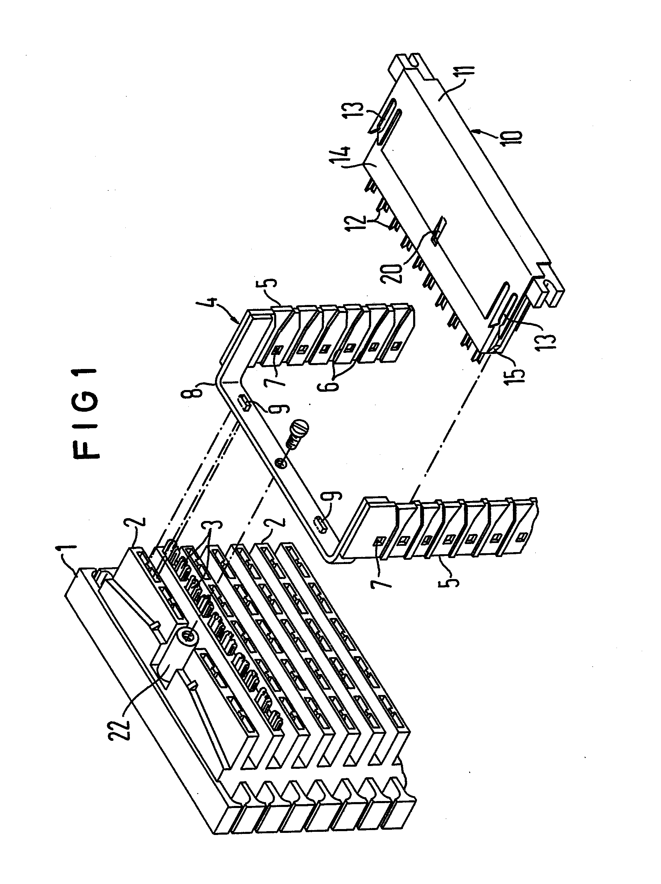

Fig. 1 zeigt in der linken Hälfte den Anschlußverteiler
1, an den die erfindungsgemäße Überspannungsschutzvorrichtung angebaut werden soll, wobei vom Anschlußverteiler 1 lediglich die obere Hälfte dargestellt ist. Wie
aus der Figur zu ersehen ist, weist der Anschlußverteiler 1 eine Vielzahl von parallelliegenden Anschlußreihen 2 auf, die Aufnahmen für Anschlußklemmen 3 besitzen.
Beim dargestellten Beispiel handelt es sich bei den
Anschlußklemmen um Doppelanschlußklemmen.

Von der erfindungsgemäßen Überspannungsschutzvorrichsind in Fig. 1 dargestellt der obere Teil eines Führungsrahmens 4 sowie eine Sicherungsleiste 10 zur Aufnahme von Überspannungsableitern. Der Führungsrahmen 4
besteht aus zwei U-förmigen Befestigungsteilen 8, von
denen in Fig. 1 nur das obere Befestigungsteil dargestellt ist, und zwei Seitenteilen 5. Die Seitenteile 5
weisen innen liegende Führungsnuten 6 auf, die in ihrem
vorderen Teil Einlaufschrägen zum besseren Einführen
der Sicherungsleisten 10 besitzen. Im dargestellten
Ausführungsbeispiel werden die beiden Befestigungsteile 8 an den Anschlußverteiler 1 angeschraubt, wobei
der Abstand zwischen Anschlußverteiler 1 und Führungsrahmen 4 mittels einer Distanzbuchse 22 bestimmt werden
kann. Die Befestigungsteile 8 weisen Zentriernoppen 9
auf, die mit Aufnahmen des Anschlußverteilers 1 in Eingriff gebracht werden und zur Zentrierung der Überspannungsschutzvorrichtung dienen.

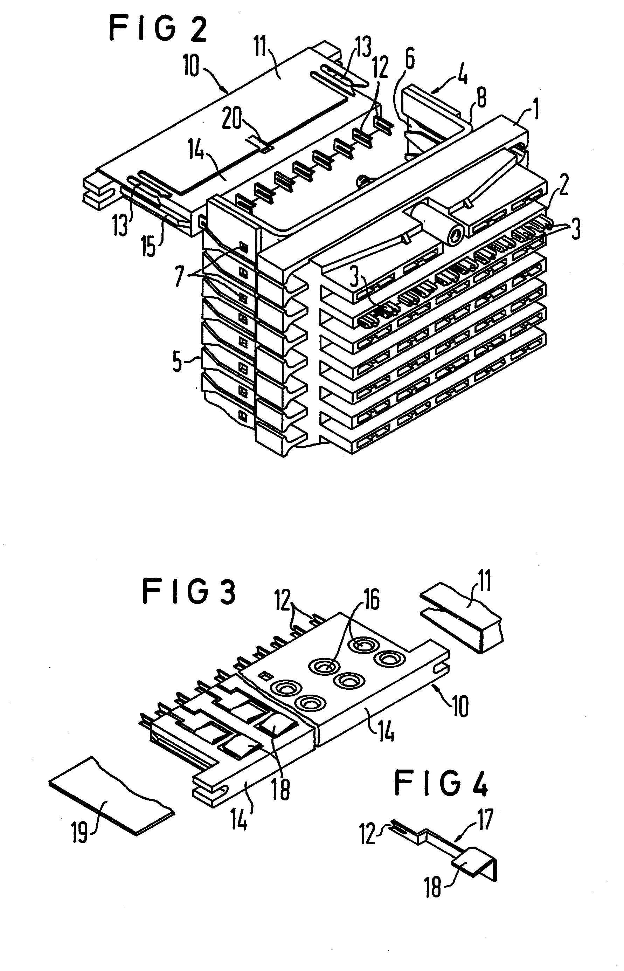

Weiterhin zeigt Fig. 1 die Ansicht einer Sicherungsleise 10, die in den Führungsrahmen 4 eingeschoben werden kann. Diese Sicherungsleiste 10 besteht im wesentlichen aus einem Isolierstoffkörper 14 und einem U-förmigen Erdungsblech 11. Der genaue Aufbau der Sicherungsleiste 10 wird später anhand der Fig. 3 und 4 beschrieben. Der Isolierstoffkörper 14 der Sicherungsleiste 10
weist an den Seiten Führungsstege 15 auf, die bei Einschieben der Sicherungsleiste 10 in den Führungsrahmen 4 mit den Führungsnuten 6 in Eingriff gelangen.
Auf der Oberseite des U-förmigen Erdungsbleches 11
sind rechts und links Erdungskontakte 13 herausgestanzt, die beim Einschieben der Sicherungsleiste 10
in den Führungsrahmen 4 in die Kontaktöffnungen 7 einrasten und so den Kontakt zwischen Erdungsblech und
Führungsrahmen herstellen. Der metallische Führungsrahmen 4 - hier nicht dargestellt - ist mit Erdpotenial verbunden.

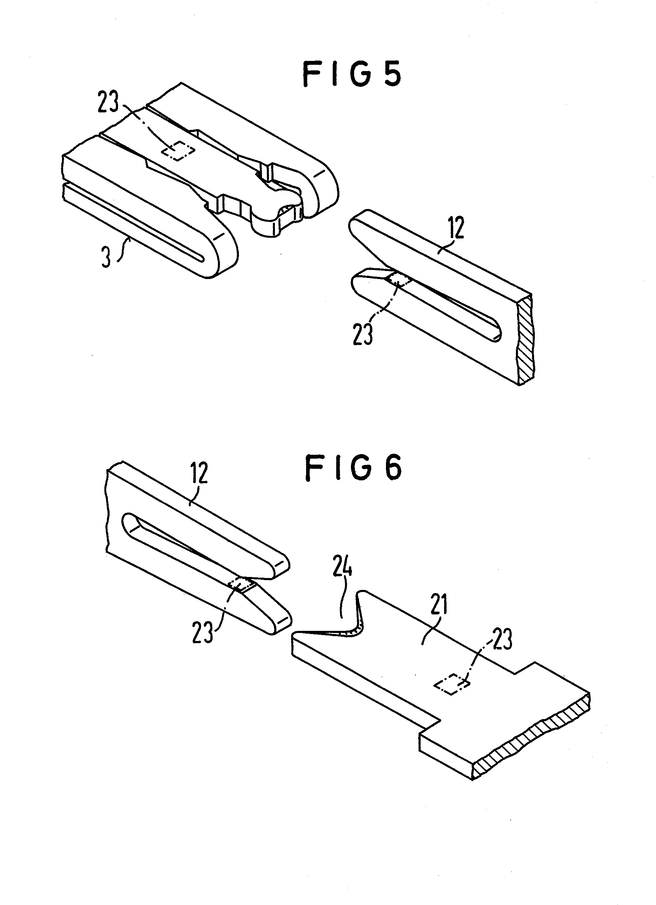

Fig. 2 zeigt die Anordnung von Anschlußverteiler 1, Führungsrahmen 4 und Sicherungsleisten 10 zueinander bei rückseitigem Anbau einer Überspannungsschutzvorrichtung gemäß der vorliegenden Erfindung. Der Aufbau des Führungsrahmens sowie der Sicherungsleisten ist sowohl für einen vorderseitigen als auch für einen rückseitigen Anbau der Überspannungsschutzvorrichtung gleich. Bei einem rückseitigen Anbau der Überspannungsschutzvorrichtung ist lediglich erforderlich, daß die Anschlußklemmen 3 des Anschlußverteilers 1 nach hinten verlängert sind, um eine Verbindung mit der Sicherungsleiste 10 zu ermöglichen. Eine mögliche Verlängerung nach hinten einer Anschlußklemme 3 ist in Fig. 6 mit 21 gekennzeichnet. Diese Verlängerung liegt in der Ebene der Anschlußklemme 3 und weist einen keilförmigen Einschnitt 24 mit abgeschrägten Kanten auf.

Der rückseitige Anbau der Überspannungsschutzvorrichtung ist nachträglich nur sehr schwer durchführbar, ermöglicht aber bei Neuinstallation eines Anschlußverteilers ein einfacheres Rangieren am Anschlußverteiler 1. Im folgenden soll anhand von Fig. 3 und Fig. 4 der Aufbau einer Sicherungsleiste beschrieben werden. In Fig. 3 sind zwei abgebrochene Ansichten des Isolierstoffkörpers 14 dargestellt, wobei die eine Ansicht gegenüber der anderen um 180° gedreht ist. Der Isolierstoffkörper 14 weist zylinderförmige Aufnahme für die Überspannungsableiter 16 sowie nutartige Aufnahmen für die Erdungselemente 17 auf. Die Erdungselemente 17 bestehen jeweils aus einer Erdungsklemme 12 und einem Kontaktfederblech 18, die über einen Steg miteinander verbunden sind. Dabei ist das Erdungselement 17 so dimensioniert, daß die Erdungsklemme 12 aus dem Isolierstoffkörper 14 herausragt. Die Erdungs-

0123905

klemme 12 ist gabelförmig ausgebildet und ihre Ebene liegt parallel zu einer Querschnittsfläche der Sicherungsleiste 10. Damit wird erreicht, daß die Ebenen der Erdungsklemmen 12 und die Ebenen der Anschlußklemmen 3 sowie deren Verlängerungen senkrecht aufeinander stehen. Dies ermöglicht eine einfache Kontaktierung der Erdungsklemmen 12 mit den Anschlußklemmen 3, wie sich aus den Figuren 5 und 6 ergibt. In den Figuren 5 und 6 sind mit 23 die Kontaktstellen zwischen einer Erdungsklemme 12 und einer Anschlußklemme 3 gekennzeichnet.

Der die Erdungsklemme 12 und das Kontaktfederblech 18 verbindende Steg ist zweimal abgewinkelt, so daß die beim Einstecken der Sicherungsleiste auf die Erdungsklemme 12 wirkende Kraft aufgefangen wird. Die Ebene des Kontaktfederbleches 18 liegt im wesentlichen in der von der Unterseite des Isolierstoffkörpers 14 gebildeten Ebene, so daß das Kontaktfederblech 18 einen Kontakt mit einer Ringelektrode eines Überspannungsableiters 16 bildet. Zwischen der Unterseite des Isolierstoffkörpers 14 und dem unteren Teil des U-förmigen Erdungsbleches 11 ist eine Isolationsfolie 19 angeordnet. Damit ergibt sich nach Einschieben einer Sicherungsleiste 10 folgender Ableitstromweg: Der Ableitstromweg verläuft über die ankommende Leitung, die Anschlußklemme 3, die Erdungsklemme 12, das Kontaktfederblech 18, den Überspannungsableiter 16, das Erdungsblech 11 mit seinen seitlichen Erdungskontakten 13 und den Führungsrahmen 4, der - nicht dargestellt - mit dem geerdeten Verteilergestell verbunden ist.

6 Patentansprüche
6 Figuren

0123905

<u>Patentansprüche</u>

1. Überspannungsschutzvorrichtung zum Anbau an einen Anschlußverteiler mit in einer Vielzahl von parallelen Reihen angeordneten und den abisolierfreien Anschluß von elektrischen Leitern gestattenden Anschlußklemmen, d a d u r c h   g e k e n n z e i c h n e t  , daß ein an den Anschlußverteiler (1) anbringbarer Führungsrahmen (4) zur Aufnahme von mit Überspannungsableitern (16) bestückten Sicherungsleisten vorgesehen ist, wobei jeder Reihe zwei von Anschlußklemmen (3) eine in den Führungsrahmen (4) einschiebbare Sicherungsleiste (10) zugeordnet ist, die im einschobenen Zustand mit jeder Anschlußklemme (3) einer Reihe (2) einen Kontakt bildet und jede Anschlußklemme (3) über einen Überspannungsableiter mit Erdpotential verbindet.

2. Überspannungsschutzvorrrichtung nach Anspruch 1, d a d u r c h   g e k e n n z e i c h n e t  , daß der Führungsrahmen (4) sowohl an der Vorder- als auch an der Rückseite des Anschlußverteilers (1) anbringbar ist, und daß bei rückseitiger Anbringung des Führungsrahmens (4) die Anschlußklemmen (3) nach hinten verlängert sind, wobei die Verlängerungen einen in der Ebene der Anschlußklemme (3) liegenden keilförmigen Einschnitt (24) mit abgeschrägten Kanten aufweisen.

3. Überspannungsschutzvorrichtung nach Anspruch 1 oder 2, d a d u r c h   g e k e n n z e i c h n e t  , daß der Führungsrahmen (4) aus zwei U-förmigen Befestigungsteilen (8) besteht, welche mit Seitenteilen (5) verbunden sind, wobei die Seitenteile (5) innen angeordnete Führungsnuten (6) für die Sicherungsleisten (10) aufweisen.

4. Überspannungsschutzvorrichtung nach einem der vorher-

0123905

gehende Ansprüche, d a d u r c h   g e k e n n -
z e i c h n e t   , daß die Sicherungsleiste (10) aus
einem Isolierstoffkörper (14) und ein über diesen Isolierstoffkörper (14) geschobenes U-förmiges Erdungsblech (11) mit seitlich angeordneten Erdungskontakten
(13) besteht, wobei der Isolierstoffkörper (14) mit
zylinderförmigen Aufnahmen für Überspannungsableiter (16) und mit nutartigen Aufnahmen für Erdungselemente (17), sowie mit seitlichen Führungsstegen (15)
versehen ist.

5. Überspannungsschutzvorrichtung nach Anspruch 4,
d a d u r c h   g e k e n n z e i c h n e t   , daß
das Erdungselement (17) auf einer aus der Sicherungsleiste (10) herausragenden Erdungsklemme (12) und
einem über einen Steg mit der Erdungsklemme (12) verbundenen Kontaktfederblech (18) gebildet ist, wobei
die Erdungsklemmen (12) derart gabelförmig ausgebildet sind, daß ihre Ebenen parallel zu einer Querschnittsfläche der Sicherungsleiste (10) verlaufen,
während die Kontaktfederbleche (18) derart mit der
Erdungsklemme (13) verbunden sind, daß sich ihre
Ebenen im wesentlichen in der von der Unterseite des
Isolierstoffkörpers (14) gebildeten Ebene erstrecken.

6. Überspannungsschutzvorrichtung nach Anspruch 5,
d a d u r c h   g e k e n n z e i c h n e t   , daß
zwischen der Unterseite des Isolierstoffkörpers (14)
und dem Erdungsblech (11) eine Isolationsfolie (19)
angeordnet ist.

FIG 1

0123905

FIG 2

FIG 3

FIG 4

FIG 5

23

3

12

23

FIG 6

12

23

24

21

23